Europäisches Patentamt

(19) European Patent Office

Office européen des brevets

(11) Publication number: **0 024 958**
B1

(12) # EUROPEAN PATENT SPECIFICATION

(45) Date of publication of patent specification: 07.03.84     (51) Int. Cl.³: **G 02 B 7/26**

(21) Application number: 80400917.3

(22) Date of filing: 20.06.80

(54) Improved optical fiber terminal and method of making an improved optical fiber terminal.

(30) Priority: 27.08.79 US 70195

(43) Date of publication of application:
11.03.81 Bulletin 81/10

(45) Publication of the grant of the patent:
07.03.84 Bulletin 84/10

(84) Designated Contracting States:
DE FR GB IT

(56) References cited:
DE - A - 2 152 292
DE - A - 2 652 712
FR - A - 2 373 801
US - A - 3 963 323

(73) Proprietor: THE BENDIX CORPORATION
Executive Offices Bendix Center
Southfield Michigan 48037 (US)

(72) Inventor: Badolato, James Anthony
84 W. Main Street
Sidney, N.Y. 13838 (US)
Inventor: Kearney, Hugh Andrew
Rd 2 Box 291
Bainbridge, N.Y. 13733 (US)
Inventor: Marsh, Edward Kenneth
12 Concord St.
Sidney, N.Y. 13838 (US)
Inventor: Karol, James Joseph
28 Main Street
Unadilla, N.Y. 13849 (US)
Inventor: Luca Jr., Vincent Anthony
17 Bates Terrace
Sidney, N.Y. 13838 (US)
Inventor: Schildkraut, Alan Leslie
Star Rt Box 72
Sidney, N.Y. 13838 (US)

(74) Representative: Brullé, Jean et al,
Service Brevets Bendix 44, rue François 1er
F-75008 Paris (FR)

# Improved optical fiber terminal and method of making an improved optical fiber terminal

The present invention relates to an optical fiber terminal and to a method of making an optical fiber terminal.

In optical systems using fiber optics for transmitting signals by light energy, it is often necessary to couple two cables end-to-end for the signal transmission path. Typically an optical fiber cable comprises a fiber or a bundle of fibers covered by a jacket for protecting the fibers from damage. In order to facilitate repeated connection and disconnection of optical fiber cables, it is desirable to utilize separable connectors having single or multiple pairs of terminals, such as the connectors commonly used in the electronics industry.

Connectors for optical fiber cables are known in the prior art as shown in US—A—4 140 366 granted to Makuch et al. In the connector of this patent, an optical fiber cable is terminated in a first pin type terminal on a first connector member and another optical fiber cable is terminated in a second pin type terminal which is disposed in a socket on a second connector member. When the connector members are placed in mating relationship, the pin terminals are disposed in end-to-end relationship to provide optical coupling therebetween. Each pin terminal has a bore extending from one end of the other and the fiber core of the cable extends through the bore and an adhesive affixes the fiber core in place in the pin terminal. The end of the fiber core is flush with the end of the pin terminal and is provided with a flat optical surface.

Also, the prior art discloses terminations for optical fiber cables using ferrules of various forms as the terminal member for either a single fiber or a bundle of fibers. In the connector of US—A—4 009 931 to Malsby et al, each one of a pair of optical cables is fitted with a plastic ferrule with the ends of the fibers flush with the end of the ferrule. The ferrules are held together in end-to-end abutting relationship for optical coupling of the cables. A similar arrangement is disclosed in US Patent 4 087 158 to Lewis et al.

A further example of an optical fiber terminal is shown in DE—A—2 652 712. The terminal has an optical fiber extending therethrough and which terminates flush with an end surface of the terminal. The terminal also includes a standoff element adjacent the end of the fiber, the end of the fiber being recessed from an outer surface thereof.

FR—A—2 373 801 discloses a terminal having a coating electrodeposited on an electrically conductive member which has a bore and an optical fiber extending through said bore.

In the coupling of optical waveguides the fiber end surfaces of the fibers should have a smooth flat optical surface and the fibers of one waveguide should be disposed in close end-to-end proximity with the fibers of the other waveguide in order to minimize the coupling losses. In the prior art connectors, the ends of the optical fiber waveguides are placed in abutting engagement with each other. The difficulty with this arrangement is that the end surfaces of the fibers tend to abrade or scratch each other, especially with repeated connection and disconnection of the connectors. This, of course, has a deleterious affect on the optical coupling between the waveguides.

A general object of this invention is to provide an improved optical fiber terminal which overcomes certain disadvantages of the prior art, and particularly a terminal for optical fibers which prevents abrasion of the optical surfaces of fibers disposed end-to-end while providing efficient optical coupling therebetween.

To this end, the invention proposes an optical fiber terminal comprising an electrically conductive terminal member having a bore extending therethrough, at least one optical fiber extending through said bore and terminating flush with the end surface of said terminal member and a standoff element secured to said surface adjacent the end of the optical fiber, whereby the end of the fiber is recessed from the outer surface of the standoff element, characterized in that the standoff element is an electrodeposited coating on said surface.

Further, according to this invention, there is provided a method of making an optical fiber terminal, wherein at least one optical fiber is mounted in a metal pin with the end of the fiber flush with the end surface of the pin and a standoff element is secured to said surface, whereby the end of the fiber is recessed from the outer surface of the standoff element, characterized by applying a coating on said end surface of the pin by electrodeposition to form the standoff element.

In a preferred embodiment, a terminal pin of metal is provided with an axial bore and an optical fiber is inserted into the bore with the end of the fiber adjacent the end of the pin terminal member. An adhesive, suitably epoxy resin, is applied to the fiber at the end of the bore to hold the fiber in place. The end of the fiber and a small amount of the end surface of the pin terminal member is ground off to make the end surfaces coplanar or flush with each other. The end of the optical fiber is polished to provide a smooth flat optical surface. The end of the pin terminal member is then selectively electroplated to deposit a thin layer or coating of metal thereon; the end of the optical fiber, being an electrically non-conductive body, is not plated and remains clear.

A more complete understanding of this invention may be obtained from the description that follows, taken with the accompanying drawings wherein:

Figure 1 is an exploded perspective view of a separable connector incorporating the subject invention;

Figure 2 is a cross-sectional view of a terminal member in one stage of fabrication;

Figure 3 shows a detail of the terminal according to this invention;

Figure 4 is an end view of Figure 3;

Figure 5 shows another terminal according to this invention;

Figure 6 is a fragmentary view of a connector member with a pin terminal according to this invention; and

Figure 7 shows a socket terminal in a connector member with a pin terminal in mated relation.

Referring now to the drawings, there is shown an illustrative embodiment of the invention in an optical fiber waveguide connector of the separable type having multiple pairs of terminals. It will be appreciated, as the description proceeds that the invention is useful in many different types of connectors.

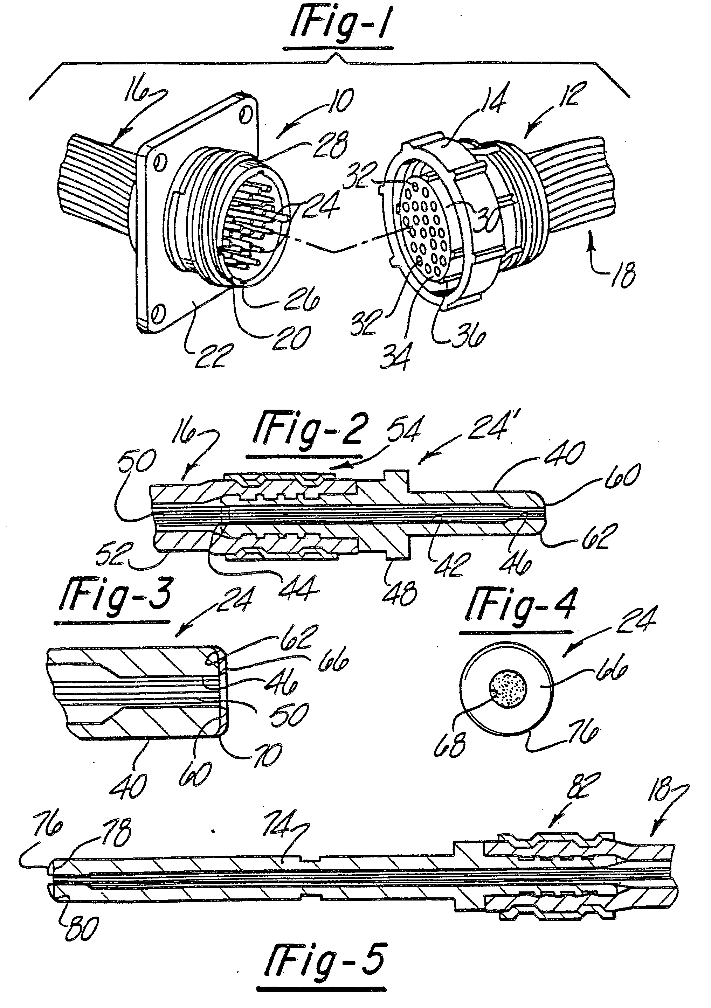

Figure 1 shows an exploded perspective view of an optical waveguide or cable connector which embodies optical fiber terminals according to this invention. The connector comprises a first connector member 10 and a second connector member 12 which are adapted to be drawn together in mating engagement by a coupling nut 14. The connector member 10 receives multiple optical fiber cables 16 at its rearward end and is adapted to couple each cable to a corresponding one of multiple cables 18 which are received by the coupling member 12 at its rearward end.

The connector member 10 comprises a cylindrical shell 20 which is provided with a mounting flange 22. The shell 20 supports multiple pin terminals 24 in an insert (not shown in Figure 1) mounted within the shell. Each of the terminal pins 24 is connected to a selected one of the optical fiber cables 16. The shell 20 is provided with plural keyways 26 to establish orientation with the connector member 12. Also, the shell 20 is provided with an external screw thread 28 which is engaged by the coupling nut 14 for drawing the members 10 and 12 into mating relationship. The connector member 12 comprises a cylindrical shell 30 which supports multiple socket terminals 32 in an insert 34. Each of the socket terminals 32 is connected with a selected one of the optical fiber cables 18 and is adapted to mate or telescopically engage a corresponding one of the pin terminals 24. The shell 30 is provided with plural keys 36 which are aligned with corresponding keyways 26 to provide proper orientation of the connector members. The coupling nut 14 is rotatably mounted on a shell 30 and is axially retained thereon in a conventional manner.

Figure 2 shows a pin terminal member 24' at one stage of fabrication. The pin terminal 24' comprises a metal pin shaft 40 having an axial bore 42 therein extending from one end of the shaft to the other. The bore has a tapered opening 44 at the rearward end of the shaft and has a cylindrical opening 46 of reduced diameter at the forward end of the shaft. The pin terminal member is provided with an annular shoulder 48 for mounting purposes and the portion of the shaft forward of the mounting shoulder is of uniform diameter. The forward end of the shaft 40 is provided with a flat annular surface 60 surrounding the opening 46. It is also provided with a rounded shoulder 62 to facilitate entrance of the finished pin terminal into a corresponding socket terminal. The portion of the shaft rearward of the shoulder 48 is adapted to receive an optical fiber cable 16. The cable 16 comprises a bundle of optical fibers of glass or plastic and a jacket 52. The cable jacket 52 is stripped from the forward end of the bundle of optical fibers and the fibers extend through the bore 42 of the shaft 40. The shaft 40 of the pin terminal 24 is provided with a crimp type fitting 54 for securing the cable 16 to the shaft.

When the bundle of optical fibers 50 is inserted through the bore 42 in the shaft 40, the fibers initially extend beyond the flat surface 60 on the forward end of the pin terminal. The fibers at the forward end are filled with a suitable adhesive, such as epoxy resin. After the adhesive is cured, the termination of the fibers is completed by grinding the ends of the fibers until they are flush with the end of the terminal member and by polishing them to provide a smooth optical surface.

According to this invention, means are provided on the end of the terminal member 24' to protect the ends of the optical fibers from abrasion when the end of the finished terminal is abutted against the end of a mating terminal. The end portion of a finished terminal 24 is shown in Figures 3 and 4. The terminal is provided with a spacer element or standoff in the form of a coating or layer 66 applied to the end surface of the terminal member including the the flat surface 60 and the rounded shoulder 62. The layer 66, as shown in Figure 4, is of annular configuration on the end of terminal member 24 with an opening 68 which coincides with the cylindrical opening 46 in the shaft 40. The outer periphery 70 of the layer 66 suitably extends over the rounded shoulder 62 and may, due to the method of applying the layer, extend up the shaft a short distance. It will be appreciated, however, that the layer 66 will be operative for its intended purpose even if it does not extend to the shoulder 62.

The layer 66 is preferably applied to the shaft 40 by electroplating and is preferably a metallic deposit, suitably of gold or silver. The layer 66 is a thin film, suitably of about 0.0025 mm thickness. A preferred plating technique is that of brush plating since it is convenient for use in field service installation, as commonly required for assembling connectors of this type. In use of brush plating, the metal shaft 40 serves as one electrode and the brush which carries the plating solution serves as the other electrode. There will be no deposit on the fibers since they are glass or plastic and electrically non-conductive; hence the layer 66 will be formed having the inner periphery 68 as shown. The extent of the outer periphery 70 will depend upon the degree of care used in touching the brush electrode to the metal shaft 40. A deposit on the circumference of the shaft 40 will be harmless because of the small thickness and it will not interfere with the fit of the terminal to a mating terminal. Of course, other plating techniques or coating methods may be used; however, the layer 66 must be applied selectively to the end surface of the terminal surrounding the fibers and must be excluded from the fibers themselves, as is inherent in electroplating.

Figure 5 shows a terminal member or socket shaft 90 which constitutes a part of a socket terminal 32 (see Figure 1). The socket shaft 74 is similar to the pin shaft 40, described above, and is provided with a surface layer 76 in the same manner as the surface layer 66. The socket shaft 74 comprises a cylindrical portion which terminates in a forward end surface including a flat annular surface 78 and a rounded shoulder 80. The surface layer 76 is deposited on the annular surface 78 and the shoulder 80. The rearward end of the shaft 74 receives a cable 18 and is provided with a crimp type fitting 82. The socket shaft 74 is assembled with a socket sleeve 84 (see Figure 7) to form the completed socket terminal 32. The socket sleeve 84 is disposed in telescopic relation with the forward end of the socket shaft. The forward end of the sleeve 84 has a clearance fit with the shaft; the rearward end has an inside sidewall surface of larger diameter which provides an annular space 86 between it and the shaft. This configuration provides a shoulder 88 in the wall of the sleeve. The rearward end of the sleeve is provided with an annular external mounting shoulder 90 which is undercut to provide an internal annular groove 92. A snap ring 94 is disposed on the shaft in an annular groove to serve as a step shoulder for the sleeve by abutment with the shoulder 88. A coil spring 96 is disposed in the annular space 86 and seated against a snap ring 98 seated in the groove 92. In the assembly of the sleeve 84 onto the socket shaft 74, the snap ring 98, spring 96 and snap ring 94 are placed over the shaft in that sequence. Then the sleeve is placed over the shaft and the snap ring 98 is snapped into the annular groove 92.

The socket terminal 32 is supported in the connector member 12 by an insert 100 and a retention member 102 which are contained within the cylindrical shell 30. The retention member is provided with an opening 104 and plural retention fingers 106 which are aligned with the opening. The socket terminal 32 is inserted through the opening so that the mounting shoulder 90 is seated against the insert and in this position the retention fingers are disposed behind the mounting shoulder to hold the socket terminal 32 in place.

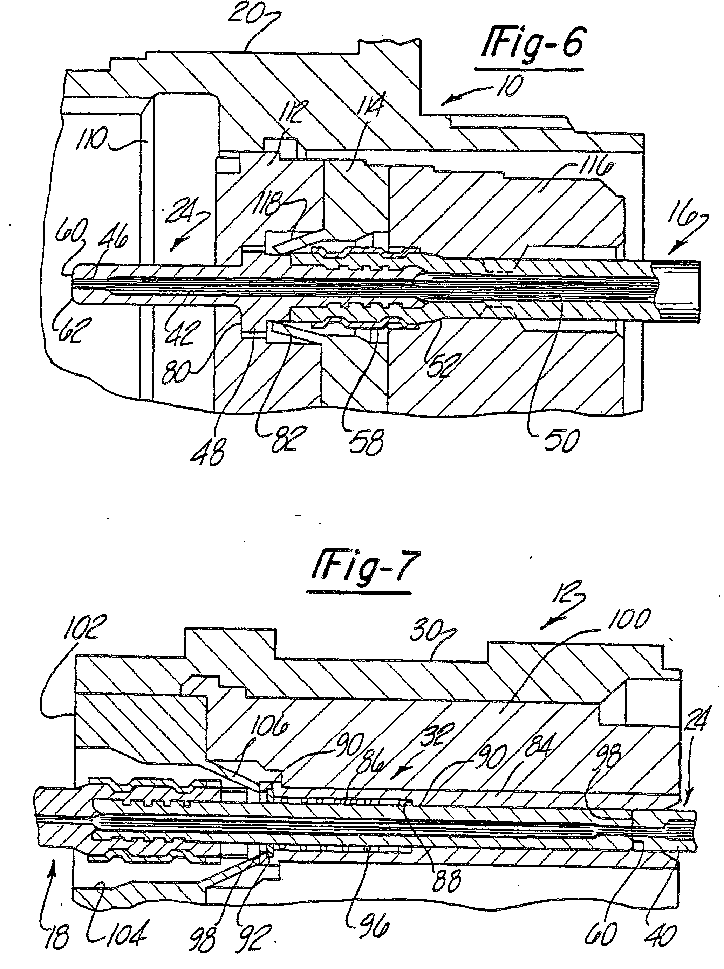

As shown in Figure 6, the pin terminal 24 is supported in the connector member 10 in a manner similar to that described for the socket terminal 32. The cylindrical shell 20 of the connector member contains an assembly of an interfacial seal 110, an insert 112, a retention member 114 and a grommet 116. The pin terminal 24 is installed by insertion through aligned passages in the grommet, retention member, insert and seal. A portion of the passage through the insert 112 is of smaller diameter and the mounting shoulder 48 is seated against a shoulder on the insert and is held in place by engagement of plural retention fingers 118 on the retention member.

When the connector members 10 and 12 are placed in mating engagement, the pin terminal 24 enters the corresponding socket terminal 32, as shown in Figure 7. With the connector members in a fully mated condition, i.e. with the coupling nut 14 tightened, the pin terminal 24 and socket terminal 32 are in end-to-end abutting engagement. In this condition, the socket shaft 90 is pushed rearwardly against the spring 96 within the socket sleeve 84 by the pin shaft 40. The spring 96 is compressed and the shoulder 94 is unseated from the shoulder 88 on the sleeve. In this abutting condition of the terminals 24 and 32, the layer 66 on the end of the pin shaft 40 is in engagement with layers 76 on the socket shaft 74. However, since the ends of the fibers 50 are recessed by the thickness of the layer 66 and the ends of the fibers in the socket contact are recessed from the surface of the layer 76, the opposed fibers are spaced from each other. This spacing of the fibers protects the optical surfaces thereof from damage due to abrasion which may occur in repeated connection and disconnection of the connector members. Because of the small thickness of the layers 66 and 76, the ends of the optical fibers are spaced only a small distance apart and good optical coupling therebetween is achieved. Further, the spacing of the ends of the optical fibers is controlled by the thickness of the layers 66 and 76 and is the same each time the terminals are reconnected. It will be understood, of course, that it is not necessary to recess the ends of the optical fibers on both terminals; instead, if desired, either the layer 76 on the socket shaft 74 or the layer 66 on the pin shaft 40 may be dispensed with.

## Claims

1. An optical fiber terminal comprising an electrically conductive terminal member (24) having a bore (42) extending therethrough, at least one optical fiber (50) extending through said bore (46) and terminating flush with the end surface (60) of said terminal member (24) and a standoff element (66) secured to said surface (60) adjacent the end of the optical fiber, whereby the end of the fiber is recessed from the outer surface of the standoff element (66), characterized in that the standoff element (66) is an electrodeposited coating on said surface (60).

2. An optical fiber terminal according to claim 1, characterized in that said terminal member (24) is made of metal.

3. A method of making an optical fiber terminal, wherein at least one optical fiber (50) is mounted in a metal pin (24) with the end of the fiber flush with the end surface (60) of the pin (24) and a standoff element (66) is secured to said surface, whereby the end of the fiber is recessed from the outer surface of the standoff element characterized by applying a coating (66) on said end surface (60) of the pin (24) by electrodeposition to form the standoff element.

4. A method according to claim 3, characterized in that said mounting comprises the steps of inserting the fiber (50) through a bore (46) in the pin (24) and removing the end of the fiber and a portion of the pin.

5. A method according to claim 4, characterized in that it includes a step of applying an adhesive around the fiber in the end of the pin prior to said removing step.

6. A method according to claim 5, characterized in that said removing comprises the steps of grinding the ends of the fiber and the pin to make the fiber flush with the end surface of the pin and polishing the end of the fiber to obtain a flat optical surface.

7. A method according to any of claims 3 to 6, characterized in that said coating has a thickness of about 0,0025 mm.

## Patentansprüche

1. Lichtleiteranschluß mit einem elektrisch leitenden Anschlußteil (24), das eine durchgehende Bohrung (42) aufweist, mindestens einer durch die Bohrung (46) verlaufenden Lichtleitfaser (50), die bündig mit der Endfläche des Anschlußteils (24) abschließt, und einem Abstandselement (66), das an der Fläche (60) neben dem Ende der Lichtleitfaser befestigt ist, wodurch das Ende der Faser gegenüber der Außenfläche des Abstandselements (66) vertieft ist, dadurch gekennzeichnet, daß das Abstandselement (66) als galvanische Schicht auf die Endfläche (60) aufgetragen ist.

2. Lichtleiteranschluß nach Anspruch 1, dadurch gekennzeichnet, daß das Anschlußteil (24) aus Metall besteht.

3. Verfahren zum Fertigen eines Lichtleiteranschlusses, bei dem mindestens eine Lichtleitfaser (50) in einem metallischen Stift (24) montiert ist, wobei das Ende der Faser bündig mit der Endfläche (60) des Stiftes (24) abschließt, und ein Abstandselement (66) auf der Endfläche angebracht ist, wodurch das Ende der Faser gegenüber der Außenfläche des Abstandselements vertieft liegt, dadurch gekennzeichnet, daß eine Schicht (66) auf die Endfläche (60) des Stiftes (24) galvanisch aufgebracht wird, um das Abstandselement zu bilden.

3. Verfahren nach Anspruch 3, dadurch gekennzeichnet, daß die Montage folgende Arbeitsgänge umfaßt: Einsetzen der Faser (50) in eine Bohrung (46) im Stift (24) sowie Entfernen des Endes der Faser und eines Abschnittes des Stiftes.

5. Verfahren nach Anspruch 4, dadurch gekennzeichnet, daß ein Kleber rings um die Faser am Ende des Stiftes vor dem Entfernvorgang aufgebracht wird.

6. Verfahren nach Anspruch 5, dadurch gekennzeichnet, daß der Entfernvorgang folgende Schritte umfaßt: Abschleifen der Enden der Faser und des Stiftes, um die Faser mit der Endfläche des Stiftes bündig zu machen, sowie Polieren des Endes der Faser, um eine ebene optische Fläche zu erhalten.

7. Verfahren nach einem der Ansprüche 3—6, dadurch gekennzeichnet, daß die Schicht eine Dicke von ca. 0,0025 mm aufweist.

## Revendications

1. Un contact de fibres optiques comprenant un organe de contact (24) électriquement conducteur traversé par un alésage (42), au moins une fibre optique (50) s'étendant dans ledit alésage (46) et se terminant de niveau avec la surface d'extrémité (60) dudit organe de contact (24) et un élément d'écartement (66) fixé à ladite surface (60) et un emplacement adjacent à l'extrémité de la fibre optique, de telle sorte que l'extrémité de la fibre est en retrait par rapport à la surface extérieure de l'élément d'écartement (66), caractérisé en ce que l'élément d'écartement (66) est un revêtement électrodéposé sur ladite surface (60).

2. Un contact de fibres optiques, selon la revendication 1, caractérisé en ce que l'organe de contact (24) est fabriqué en métal.

3. Un procédé de fabrication d'un contact de fibres optiques suivant lequel au moins une fibre optique (50) est montée dans une tige métallique (24) avec la surface d'extrémité de la fibre de niveau avec la surface d'extrémité (60) de la tige (24) et un élément d'écartement (66) est fixé à ladite surface, de telle sorte que l'extrémité de la fibre est en retrait par rapport à la surface extérieure de l'élément d'écartement, caractérisé par le fait qu'on applique un revêtement (66) sur ladite surface d'extrémité (60) de la tige (24) par électrodéposition afin de former l'élément d'écartement.

4. Un procédé selon la revendication 3, caractérisé en ce que ledit montage comporte les étapes qui consistent à introduire la fibre (50) dans un alésage (46) formé dans la tige (24) et à enlever l'extrémité de la fibre et une partie de la tige.

5. Un procédé selon la revendication 4, caractérisé en ce qu'il comporte une étape qui consiste à appliquer un adhésif autour de la fibre contenue dans l'extrémité de la tige avant ladite étape d'enlèvement.

6. Un procédé selon la revendication 5, caractérisé en ce que ledit enlèvement comporte les étapes qui consistent à meuler les extrémités de la fibre et de la tige pour mettre la fibre de niveau avec la surface d'extrémité de la tige et à polir l'extrémité de la fibre pour obtenir une surface optique plate.

7. Un procédé selon l'une quelconque des revendications 3 à 6, caractérisé en ce que ledit revêtement a une épaisseur d'environ 0,0025 mm.

0 024 958

*Fig-1*

*Fig-2*

*Fig-3*

*Fig-4*

*Fig-5*

_Fig-6_

_Fig-7_